# EUROPÄISCHE PATENTSCHRIFT

(11) **EP 2 327 343 B1**
(45) Veröffentlichungstag und Bekanntmachung des Hinweises auf die Patenterteilung: **16.01.2013**
(21) Anmeldenummer: 10192770.5
(22) Anmeldetag: 26.11.2010
(51) Int. Cl.: A47J 43/08, A47J 44/02, A47J 43/07, A47J 43/06, A47J 43/044

(54) **Universal-Küchenmaschine**
Food Processor
Robot ménager

(30) Priorität: 27.11.2009 DE 202009016181 U
(43) Veröffentlichungstag der Anmeldung: 01.06.2011
(73) Patentinhaber: Kompernass Handelsgesellschaft MbH, 44867 Bochum (DE)
(72) Erfinder: Linden, Christian, 44867 Bochum (DE)
(74) Vertreter: Nunnenkamp, Jörg

(56) Entgegenhaltungen:
- CH-A- 256 805
- CH-A- 282 989
- CH-A- 320 244
- CN-Y- 201 205 230
- DE-A1- 2 551 842
- DE-A1- 2 930 533
- DE-U1-202006 014 145

## Beschreibung

Die Erfindung betrifft ein Küchengerät, insbesondere eine elektromotorische Universalküchenmaschine, zur Aufnahme einer Anzahl austauschbarer Nahrungsmittel-Zubereitungswerkzeuge sowie wenigstens einer abnehmbaren Schüssel, mit einem Boden, ferner mit wenigstens einem Sockel, und mit einem an den Sockel angeschlossenen Quertraverse, welche ein daran befestigtes sowie seitlich versetzt zum Sockel angeordnetes Antriebsaggregat trägt, wobei zumindest das Antriebsaggregat um eine im Wesentlichen horizontale Achse schwenkbar ausgebildet ist, zwei Sockel jeweils endseitig der Quertraverse vorgesehen sowie in ihrem rückwärtigen Bereich durch eine Verbindungswand miteinander gekoppelt sind, die horizontale Achse kopfseitig durch den jeweiligen Sockel und die Quertraverse hindurchgeht und wobei die beiden Sockel, der Boden und die Verbindungswand ein einstückiges Bauteil, insbesondere ein einstückiges Kunststoffbauteil, definieren.

Im gattungsbildenden Stand der Technik nach der CH 320 244 A wird ein elektrisch angetriebenes Misch- und Rührwerk für Küche und Haushalt beschrieben, bei welchem sich der Motor um eine waagerechte Achse gegenüber einem Grundgestell verschwenken lässt. Zu diesem Zweck ist der Motor um einen waagerechten Zapfen schwenkbar an dem fraglichen Grundgestell gelagert und kann mit Hilfe einer Verriegelung in waagerechter Lage eingerastet werden. Das Motorgehäuse drückt in dieser Lage mit einer Nase von innen gegen den Rand einer Rührschüssel, die zugleich von außen gegen Anschläge am Grundgestell anliegt. Dadurch wird die Schüssel in ihrer Lage festgehalten. Allerdings überwiegend punktuell.

Im Dokument DE 29 30 533 A1 wird eine Mehrzweck-Küchenmaschine mit einem einzelnen Sockel, der eine schwenkbare Antriebseinheit trägt, offenbart. Ein fußseitiger Steg in der Schüssel wird in die einzige bogenförmige Aufnahmenut der Auflagefläche eingesetzt um eine sichere Verbindung zu schaffen.

Das Dokument CH 256 805 A offenbart eine elektrisch angetriebene Küchenmaschine mit einer einzelnen, das Werkzeug tragenden Säule. Die Schüssel zur Nahrungszubereitung wird mittels mehrerer bajonettartiger Verschlüsse an der Auflage der Küchenmaschine fixiert. Die Aufnahmenuten in der Grundfläche sind dementsprechend als Schlitze mit lochartiger Erweiterung ausgelegt.

Ein anderes Küchengerät wird beispielsweise in der CN 201205230Y beschrieben und bildlich dargestellt. Der dort realisierte Aufbau ist jedoch hinsichtlich seiner Komplexität verbesserungsbedürftig.

Darüber hinaus werden ähnliche Küchengeräte beispielsweise in der DE 25 51 842 C3 sowie der DE 20 2006 014 145 U1 beschrieben. Beide Ausführungsformen haben sich grundsätzlich bewährt, wenn es darum geht, mit mehreren und austauschbaren Nahrungsmittel-Zubereitungswerkzeugen flexibel arbeiten zu wollen und zugleich die Möglichkeit zu schaffen, beispielsweise Teig in der abnehmbaren Schüssel anzurühren. Tatsächlich handelt es sich bei den fraglichen und austauschbaren Nahrungsmittel-Zubereitungswerkzeugen üblicherweise um beispielsweise Rührgeräte wie Schneebesen, Teigkneter, Pürierbesen, Mixer, Durchlaufschnitzler etc.. Selbstverständlich können auch Werkzeuge wie eine Getreidemühle oder Schneidwerke, Fruchtpressen, Schlagbesen oder dergleichen ebenso wie ein Fleischwolf angeschlossen werden. Die Schüssel ist im Allgemeinen als Rührschüssel ausgelegt, was selbstverständlich wie die zuvor angegebene Aufzählung der Nahrungsmittel-Zubereitungswerkzeuge nicht einschränkend zu verstehen ist.

Neben den vorbeschriebenen gattungsgemäßen Küchengeräten existieren andere Bauformen, wie sie beispielhaft in der CH 282989 im Detail vorgestellt werden. Hier ist eine relativ massive Säule bzw. ein Sockel vorgesehen, der mit einer Längstraverse ausgerüstet ist, welche frontseitig den Antriebsmotor bzw. das Antriebsaggregat trägt. Die Längstraverse erstreckt sich in Frontansicht in Längsrichtung des Sockels bzw. der Säule und nicht wie die Quertraverse in Querrichtung. Insofern verfügt das Antriebsaggregat auch nicht über einen seitlichen Versatz zum Sockel, sondern ist praktisch in einer gemeinsamen Längsebene von Sockel und Längstraverse angeordnet. Innerhalb dieser Längsebene lässt sich ein Teil des Sockels abklappen. Dadurch können einzelne Nahrungsmittel-Zubereitungswerkzeuge problemlos ausgetauscht werden.

Bei diesem Vorgang bewegt sich der Schwerpunkt der gesamten bekannten Küchenmaschine kaum bzw. nur in der fraglichen Längsebene. Das erklärt die außerordentliche Stabilität und Standfestigkeit der bekannten Küchenmaschinen, die in der Praxis auch als sogenannte "Frontlader" bezeichnet werden. Dies wird allerdings mit einem relativ ausladenden Aufbau erkauft, weil die darunter angeordnete Schüssel von der gesamten Längstraverse übergriffen werden muss und lediglich bis zum Rand der Säule bzw. des Sockels reicht.

Demgegenüber verfügen Gestaltungen entsprechend der DE 25 51 842 C3 oder der DE 20 2006 014 145 U1 über einen kompakteren Aufbau, weil der seitliche Versatz des Antriebsaggregates und seine Anbringung an der Quertraverse eine Platzierung der Schüssel mit praktisch Überdeckung im Vergleich zum Sockel in Seitenansicht ermöglicht. Tatsächlich verfügen die Quertraverse und das Antriebsaggregat in Aufsicht über eine T-förmige Gestalt, wobei der Scheitel der beiden T-Schenkel seitlich vom Sockel versetzt auf der Quertraverse angeordnet ist. Daraus resultiert ein relativ großer Freiraum unterhalb der Quertraverse nebst angeschlossenem Antriebsaggregat. Dieser Freiraum kann zur Aufnahme der abnehmbaren Schüssel anderweitig genutzt werden.

Allerdings führt die insgesamt asymmetrische Gestaltung dazu, dass der Schwerpunkt der gesamten Küchenmaschine seitlich vom Sockel angeordnet ist und in einer seitlichen Ebene seine Position ändert, wenn das Antriebsaggregat um die horizontale Achse verschwenkt wird. Das kann zu einem Kippmoment führen. Daraus resultieren Instabilitäten im Betrieb.

Der Erfindung liegt das technische Problem zugrunde, ein derartiges Küchengerät so weiter zu entwickeln, dass die Standfestigkeit bei zugleich kompaktem Aufbau verbessert ist.

Zur Lösung dieser technischen Problemstellung ist Gegenstand der Erfindung ein Küchengerät nach Anspruch 1. Meistens formen darüber hinaus das Antriebsaggregat und die Quertraverse ebenfalls eine Baueinheit, die gemeinsam um die horizontale Achse schwenkbar ausgelegt ist. Um die fragliche horizontale Achse lässt sich das Antriebsaggregat schwenken. Das Antriebsaggregat und die Quertraverse verfügen im Regelfall über eine in Aufsicht T-förmige Gestalt - gegebenenfalls unter Einbeziehung der beidseitig der Quertraverse vorgesehenen Sockel. Das ist allerdings nicht zwingend.

Üblicherweise sind die beiden Sockel größtenteils gleich ausgeführt, verfügen also über eine im Wesentlichen gleiche Breite, Stärke und Höhe. Dadurch wird gewährleistet, dass die horizontale Achse kopfseitig durch beide Sockel hindurchführt. Zugleich ist der Abstand der beiden Sockel und damit die Länge der Quertraverse so bemessen, dass die unterhalb des Antriebsaggregates angeordnete Schüssel zumindest teilweise in Seitenansicht zwischen die beiden Sockel eintaucht und auch eintauchen kann. Auf diese Weise wird ein kompakter Aufbau zur Verfügung gestellt, weil in Seitenansicht des erfindungsgemäßen Küchengerätes eine zumindest teilweise Überdeckung zwischen dem jeweiligen Sockel und der Schüssel vorliegt. Dadurch kann die Länge des Antriebsaggregates im Vergleich zu der ihn tragenden Quertraverse relativ gering bemessen werden, beträgt im Allgemeinen weniger als der Radius der Schüssel.

Der Schwerpunkt des erfindungsgemäßen Küchengerätes ist nun auf einer Ebene zwischen den beiden Sockeln angeordnet und verbleibt auch auf dieser Ebene, wenn das Antriebsaggregat um seine horizontale Achse verschwenkt wird. Denn die fragliche Ebene mit dem daran bzw. darin angeordneten Schwerpunkt durchschneidet das Antriebsaggregat und fällt regelmäßig mit einer Symmetrieebene für das gesamte erfindungsgemäße Küchengerät zusammen oder nahezu zusammen.

Dabei wird meistens so vorgegangen, dass die Quertraverse und das Antriebsaggregat in einem gemeinsamen Gehäuse aufgenommen werden, welches die fragliche Schwenkbewegung um die kopfseitig durch die beiden Sockel hindurchgehende horizontale Achse vollführt. Das heißt, die Quertraverse und das Antriebsaggregat sind zu einer Baueinheit zusammengefasst, die insgesamt um die horizontale Achse verschwenkt wird. Die Baueinheit verfüg in Aufsicht über eine T-förmige Gestalt - gegebenenfalls in Verbindung mit den beiden Sockeln. Dabei formt die Quertraverse (inklusive der Sockel) den einen T-Schenkel, während das Antriebsaggregat den andere T-Schenkel bildet.

Beide Sockel sind im Allgemeinen randseitig an den Boden angeschlossen. Außerdem sind die beiden Sockel durch einen Verbindungsbereich des Bodens miteinander gekoppelt. Dieser Verbindungsbereich zwischen den beiden Sockeln geht in eine frontseitige Auflage für die Schüssel über. Dabei ist eine insgesamt nahezu symmetrische Gestaltung des Bodens bzw. des gesamten Küchengerätes mit größtenteils mittiger Symmetrieebene zwischen den beiden Sockeln gewählt.

Tatsächlich ist das Antriebsaggregat in etwa mittig bis leicht seitlich im Vergleich zur Mitte versetzt an die Quertraverse angeschlossen. Diese mittige bis leicht seitlich versetzte Anordnung ergibt sich bei einer Frontansicht auf die Sockel mit der dazwischen aufgenommenen Quertraverse. Der (leichte) Versatz erklärt sich aufgrund der Tatsache, dass das Antriebsaggregat mit einer Rotorwelle ausgerüstet ist, welche an ihrem einen frontseitigen Ende mit einem horizontal ausgerichteten Antriebsrad kämmt. Das Zentrum dieses Antriebsrades befindet sich im Wesentlichen auf der bereits angesprochenen Symmetrieebene zwischen den beiden Sockeln. Demgegenüber weist die tangential an das horizontale Antriebsrad angeschlossene Rotorwelle den bereits angesprochenen (geringfügigen) seitlichen Versatz auf. Dieser seitliche Versatz mag in etwa dem Radius des fraglichen Antriebsrades entsprechen.

Da das Antriebsrad im Wesentlichen parallel zum gemeinsamen Gehäuse für das Antriebsrad und die Rotorwelle sowie schließlich der Quertraverse angeordnet ist, lassen sich fußseitig und kopfseitig des fraglichen Antriebsrades jeweils zwei sich gegenüberliegende Ansätze realisieren. Diese Ansätze dienen zum Antrieb von austauschbaren Nahrungsmittel-Werkzeugen, die an die Ansätze angesteckt oder auf diese aufgesteckt werden können. Dabei mag mit einer vergleichbaren nabenartigen Gestaltung des jeweiligen Ansatzes gearbeitet werden, wie sie in der DE 25 51 842 C3 in der dortigen Fig. 4 dargestellt ist. Das ist selbstverständlich nur als ein mögliches Beispiel von vielen zu verstehen.

Neben diesen beiden beschriebenen und an dem frontseitigen Antriebsrad realisierten Ansätzen findet sich ein weiterer Ansatz in rückwärtiger Verlängerung der Rotorwelle des Antriebsaggregates. Tatsächlich verfügt die Rotorwelle an dem einen frontseitigen Ende über das beschriebene Antriebsrad, mit welchem die Rotorwelle kämmt. Dagegen ist der bereits angesprochene gleichsam dritte Ansatz in rückwärtiger Verlängerung der Rotorwelle vorgesehen. Das heißt, die Rotorwelle des Antriebsaggregates geht in ihrem rückwärtigen Bereich unmittelbar in den dritten Ansatz über. Dieser mag vergleichbar wie die beiden zuvor bereits beschriebenen Ansätze gestaltet sein und dient erneut zum Antrieb von an- oder aufsteckbaren austauschbaren Nahrungs-Werkzeugen.

Wie bereits erläutert, sind die beiden die Quertraverse mit dem angeschlossenen Antriebsaggregat kopfseitig tragenden Sockel durch einen Verbindungsbereich als Bestandteil des Bodens miteinander gekoppelt. Zusätzlich werden die beiden Sockel in ihrem rückwärtigen Bereich noch durch die gegenüber dem fraglichen Verbindungsbereich hochgezogene Verbindungswand miteinander verbunden. Diese Verbindungswand mag zugleich als etwaiger Anschlag für die unter dem Antriebsaggregat und teilweise zwischen den Sockeln platzierte Schüssel dienen. Außerdem stellt die Verbindungswand sicher, dass beispielsweise auf dem Boden sich ansammelnde Nahrungsmittel nicht in den rückwärtigen Bereich fließen, von diesem runterfallen oder herunterfließen. Zu diesem Zweck ist die Verbindungswand vorteilhaft an den Boden angeschlossen.

Um die Positionierung der Schüssel zu vereinfachen und ihre Standfestigkeit zu verbessern, verfügt der Boden in der Regel über mehrere Aufnahmenuten für einen hierin eingreifenden Steg der Schüssel. Meistens sind zwei oder drei sich radial im Vergleich zu einem Mittelpunkt einer frontseitigen Auflage für die Schüssel gegenüberliegende Aufnahmenuten realisiert. Hierzu gehören zwei oder mehr zugehörige Stege der Schüssel, die in die jeweiligen Aufnahmenuten eingreifen. Diese Stege sind regelmäßig am Fuß der Schüssel vorgesehen. Meistens handelt es sich um bogenförmige Stege am Umfang der Schüssel im Fußbereich.

Jedenfalls führt das Zusammenspiel von einerseits den Aufnahmenuten und andererseits den hierin eingreifenden Stegen dazu, dass die Schüssel auf dem Boden bzw. der dort realisierten frontseitigen Auflage nicht nur eine einwandfreie Positionierung, sondern einen sicheren Stand erhält. Diese frontseitige Auflage schließt sich an den Verbindungsbereich zwischen den beiden Sockeln an. Der Verbindungsbereich ist überwiegend und angenähert rechteckig gestaltet. Dagegen verfügt die frontseitige Auflage über eine kreisscheibenartige Gestaltung, die an die Größe der dort aufgenommenen und platzierten Schüssel angepasst ist.

Dadurch, dass die beiden Sockel, der Boden und die die beiden Sockel verbindende Rückwand bzw. Verbindungswand als einstückiges Bauteil ausgeführt sind, lassen sich die Herstellungskosten für das erfindungsgemäße Küchengerät gering halten. Hier hat sich ein Kunststoffbauteil als besonders günstig erwiesen. Diese Auslegung begünstigt auch die Standfestigkeit. Denn durch die einstückige Auslegung werden Bewegungen der einzelnen Bestandteile im Betrieb schon dem Grunde nach unterbunden. Außerdem gewährleistet eine derartige Ausgestaltung eine gleichmäßige Gewichtsverteilung, so dass die Lage des Schwerpunktes in oder nahe der Symmetrieebene des Küchengerätes sichergestellt ist, und zwar auch beim Schwenken des Antriebsaggregates. Schließlich begünstigt der Verzicht auf Schlitze, Anschlüsse etc. eine einwandfreie Reinigung und lang andauernde Funktionssicherheit.

Außerdem ist die Auslegung meistens so getroffen, dass das Gehäuse zur Aufnahme des Antriebsaggregates sowie der Darstellung der Quertraverse meistens zweigeteilt ausgeführt ist. Hier hat sich eine überwiegende Horizontalteilung des fraglichen zweigeteilten Gehäuses als besonders günstig erwiesen.

Um die unterschiedlichen Ansätze flexibel nutzen zu können, lässt sich die Quertraverse zusammen mit dem Antriebsaggregat in verschiedenen Schwenkpositionen arretieren. Diese unterschiedlichen Schwenkpositionen werden im Vergleich zur durch die beiden Sockel und durch die Quertraverse hindurchgehenden Horizontalachse eingenommen. Dadurch lassen sich verschiedene Schwenkpositionen der Quertraverse inklusive Antriebsaggregat realisieren. Als Folge hiervon kann beispielsweise ein Mixer auf den rückwärtigen Ansatz der Rotorwelle des Antriebsaggregates aufgesteckt werden, wenn zuvor die Quertraverse inklusive Antriebsaggregat in eine nahezu senkrechte Position verbracht worden ist und in dieser arretiert wurde. Dagegen korrespondiert beispielsweise eine horizontale Position der Quertraverse inklusive Antriebsaggregat dazu, dass mit einem Rührbesen oder dergleichen gearbeitet wird.

In diesem Zusammenhang ist die Auslegung meistens so getroffen, dass der fragliche Rührbesen eine Taumelbewegung vollführen kann. Diese lässt sich darauf zurückführen, dass das frontseitig an die Rotorwelle angeschlossene Antriebsrad mit einer Kegelradverzahnung ausgestattet ist. Das Antriebsrad treibt ein oder mehrere schräg verzahnte Planetenräder in der Art eines Planetenradgetriebes an, dessen bzw. deren Achsen in eine Durchgangsbohrung bzw. den an dieser Stelle realisierten Ansatz übergeht bzw. übergehen. Eine solche Auslegung ist selbstverständlich nur beispielhaft zu verstehen.

Um die Quertraverse inklusive Antriebsaggregat in einer zuvor eingenommenen Schwenkposition zu verriegeln, ist allgemein eine Handhabe bzw. Verriegelungshandhabe vorgesehen, bei welcher es sich um einen Verriegelungsknopf handelt oder handeln kann. Mit Hilfe dieses üblicherweise kopfseitig an einen Sockel angeschlossenen Verriegelungsknopfes lässt sich die Quertraverse inklusive Antriebsaggregat in meistens mehreren zuvor vorgegebenen und fest eingestellten Winkelpositionen gegenüber der horizontalen Achse arretieren.

Im Ergebnis wird ein Küchengerät zur Verfügung gestellt, welches einen kompakten Aufbau aufweist und zugleich über eine besondere Standsicherheit verfügt. Hierzu trägt ergänzend die spezielle Aufnahme für die Schüssel und deren reproduzierbare und feste Haltung gegenüber dem Boden besonders bei. Da der Schwerpunkt zwischen den beiden Sockeln angeordnet ist und eine zugehörige Schwerpunktebene mit einer Symmetrieebene des Küchengerätes im Wesentlichen zusammenfällt, ändern sich die Bedingungen bei unterschiedlicher Positionierung des Antriebsaggregates inklusive der Quertraverse gegenüber den beiden Sockeln im Vergleich zum Stand der Technik nicht. Das heißt im Klartext, etwaige Kippmomente, wie sie bei der Lehre nach DE 25 51 842 C3 und selbstverständlich im Rahmen der nahezu baugleichen Küchenmaschine entsprechend DE 20 2006 014 145 U1 auftreten können und in Folge der asymmetrischen Gestaltung gleichsam unvermeidlich sind, werden beherrscht.

Zugleich wird eine besonders kompakte Gestaltung zur Verfügung gestellt. Diese lässt sich darauf zurückführen, dass die Sockel zum einen schlank gestaltet sind und werden können. Denn etwaige Kräfte vom Antriebsaggregat oder auch der Quertraverse werden auf zwei Sockel und nicht einen Sockel wie bei der Lehre nach der DE 25 51 842 C3 übertragen. Dadurch können die jeweiligen Sockel stelenartig ausgelegt werden und verfügen üblicherweise über eine Sockelbreite, welche in etwa 1/5 oder noch weniger der Sockelhöhe beträgt. Dabei sind die Sockel im Wesentlichen mit einer rechteckförmigen Querschnittsfläche ausgerüstet. Dadurch gelingt es zum andern, dass die frontseitige Auflage für die Schüssel zumindest teilweise in den Verbindungsbereich zwischen den beiden Sockeln eintaucht und auch eintauchen kann.

Als Folge hiervon überdecken sich die auf der frontseitigen Auflage des Bodens platzierte Schüssel einerseits und der jeweilige Sockel in Seitenansicht andererseits. Eine derartige Überdeckung lässt der alternative Stand der Technik nach der CH 282989 nicht zu, weshalb sich sein relativ ausladender Aufbau erklärt. Aufgrund dieses ausladenden Aufbaus ist dann natürlich auch ein besonders voluminöser Sockel erforderlich, der die Baugröße noch einmal erhöht. Jedenfalls kombiniert die Erfindung einen ähnlich kompakten Aufbau, wie er im Rahmen der DE 25 51 842 C3 oder auch gemäß DE 20 2006 014 145 U1 beobachtet wird mit einer vergleichbaren Standfestigkeit, wie sie die Küchenmaschine entsprechend der CH 282989 liefert. Das alles gelingt unter Berücksichtigung eines universellen Einsatzes, wobei insgesamt drei (oder mehr) verschiedene Ansätze für austauschbare Nahrungsmittel-Zubereitungswerkzeuge zur Verfügung stehen. Hierin sind die wesentlichen Vorteile zu sehen.

Im Folgenden wird die Erfindung anhand einer lediglich ein Ausführungsbeispiel darstellenden Zeichnung näher erläutert: Es zeigen:
- **Fig. 1**: das erfindungsgemäße Küchengerät in einer Frontansicht,
- **Fig. 2**: den Gegenstand in einer Seitenansicht aus Richtung X gemäß Fig. 1,
- **Fig. 3**: den Gegenstand nach Fig. 1 aus einer anderen Seitenansicht gemäß Richtung Y,
- **Fig. 4**: den Gegenstand nach Fig. 1 in einer anderen Funktionsstellung,
- **Fig. 5**: den Gegenstand nach Fig. 1 in Seitenansicht mit angebautem Nahrungsmittel-Zubereitungswerkzeug sowie aufgesetzter Schüssel,
- **Fig. 6A**: das erfindungsgemäße Küchengerät in teilweiser perspektivischer Explosionsdarstellung und
- **Fig. 6B**: das Antriebsaggregat im Detail.

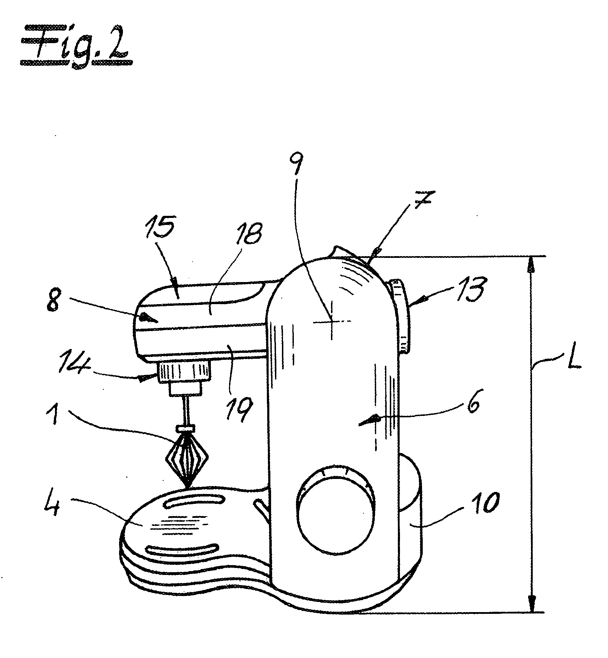

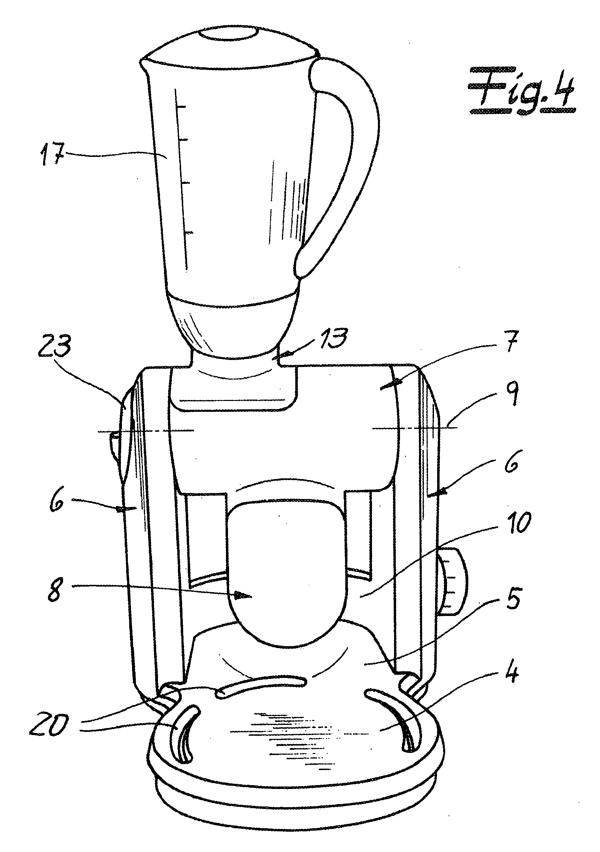

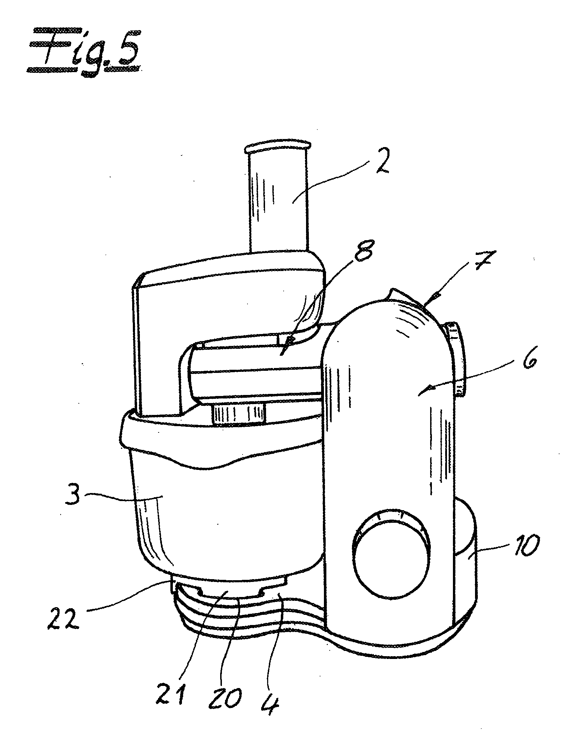

In den Figuren ist ein Küchengerät dargestellt, bei dem es sich im Ausführungsbeispiel und nicht einschränkend um eine elektromotorische Universalküchenmaschine handelt. Die Universalküchenmaschine dient zur Aufnahme einer Anzahl austauschbarer Nahrungsmittel-Zubereitungswerkzeuge 1, 2, 17 sowie wenigstens einer abnehmbaren Schüssel 3. Bei den Nahrungsmittel-Zubereitungswerkzeugen 1, 2, 17 handelt es sich im Beispiel und nicht einschränkend um einen Teigrührer 1 gemäß Fig. 2 und ein Schnitzelwerk 2 entsprechend der Darstellung nach Fig. 5. Außerdem gehört hierzu ein Mixer 17, wie er in Fig. 4 angedeutet ist.

Man erkennt, dass das gezeigte Küchengerät bzw. die elektromotorische Universalküchenmaschine mit einem Boden 4, 5 und Sockeln 6 sowie ferner einer an den Sockel bzw. die Sockel 6 angeschlossenen Quertraverse 7 ausgerüstet ist. Die Quertraverse 7 trägt ein daran befestigtes Antriebsaggregat 8, welches seitlich versetzt zum jeweiligen Sockel 6 angeordnet ist. Tatsächlich wird das Antriebsaggregat 8 in etwa mittig zwischen den beiden Sockeln 6 aufgenommen. Die Quertraverse 7 und das Antriebsaggregat 8 formen eine Baueinheit 7, 8, die in Aufsicht - gegebenenfalls unter Einbeziehung der Sockel 6 - T-förmig ausgelegt ist.

Die Sockel 6 verfügen über einen stelenartigen Charakter bzw. sind als Stelen ausgeführt. Denn sie besitzen eine größtenteils rechteckförmige Querschnittsfläche mit einer Sockelbreite B, welche in etwa 1/5 oder noch weniger der Länge L des jeweiligen Sockels 6 beträgt. Die Sockel 6 sind im Wesentlichen gleich ausgeführt und randseitig an den Boden 4, 5 angeschlossen bzw. stehen auf dem Boden 4, 5 auf. Kopfseitig verfügen beide Sockel 6 über einen abgerundeten Abschluss, welcher an den Radius der zylindrisch ausgestalteten Quertraverse 7 angepasst ist.

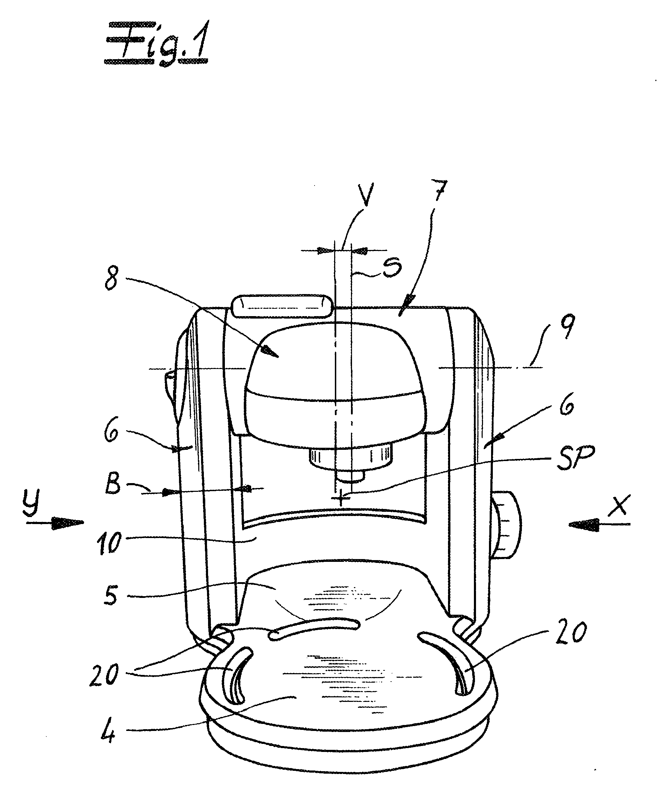

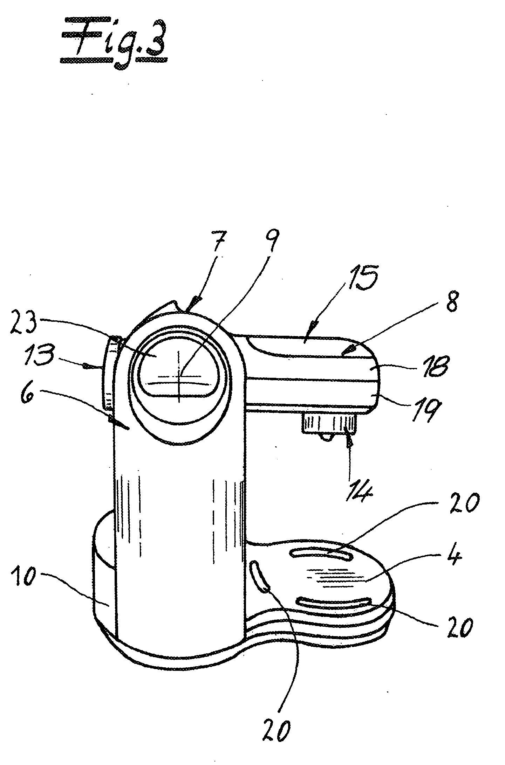

Das Antriebsaggregat 8 lässt sich inklusive der Quertraverse 7 um eine im Wesentlichen horizontale Achse 9 verschwenken. Das wird bei einer vergleichenden Betrachtung der Fig. 1 und 4 deutlich. Die vorerwähnte horizontale Achse 9 geht jeweils kopfseitig durch die beiden Sockel 6 und die Quertraverse 7 hindurch. In Bezug auf die beiden Sockel 6 ist die horizontale Achse 9 etwa auf einem Mittelpunkt des jeweils kopfseitig des Sockels 6 vorgesehenen Rundbogens angeordnet (vgl. Fig. 2 und 3). Man erkennt, dass jeweils zwei Sockel 6 endseitig der Quertraverse 7 vorgesehen sind. Dabei wird der Abstand zwischen den beiden Sockeln 6 kopfseitig von der Quertraverse 7 überbrückt. Fußseitig werden die beiden Sockel 6 durch einen Verbindungsbereich 5 als Bestandteil des Bodens 4, 5 des Küchengerätes miteinander gekoppelt. Auf diese Weise sind die Sockel 6 Bestandteile eines statischen Rechteck(-Fachwerkes), welches sich aus den beiden Sockeln 6, der die beiden Sockel 6 kopfseitig verbindenden Quertraverse 7 und schließlich dem die beiden Sockel 6 fußseitig verbindenden Verbindungsbereich 5 des Bodens 4, 5 bzw. dem Boden 4, 5 als solchen zusammensetzt. Hieraus erklärt sich eine außerordentliche Stabilität der Konstruktion und die Lage eines Schwerpunktes SP in etwa zentral in Bezug auf die beschriebene Rechteckkonstruktion (vgl. Fig. 1).

Als weitere stabilitätserhöhende Maßnahme fungiert eine Verbindungswand 10. Diese Verbindungswand 10 koppelt die beiden Sockel 6 zusätzlich in ihrem rückwärtigen Bereich und ist gegenüber dem Boden 4, 5 bzw. gegenüber dem Verbindungsbereich 5 als Bestandteil des Bodens 4, 5 zwischen den beiden Sockeln 6 hochgezogen. Das heißt, die Verbindungswand 10 stellt einen Bestandteil des Bodes 4, 5 dar bzw. ist an diesen angeschlossen.

Die betreffende Verbindungswand 10 ist spaltfrei an die beiden Sockel 6 einerseits und an den Verbindungsbereich 5 bzw. den Boden 4, 5 andererseits angeschlossen. Dadurch bildet sich zwischen den beiden Sockeln 6 eine Art Aufnahmewanne, welche am Boden 4, 5 durch den Verbindungsbereich 5 und an den Seiten durch die beiden Sockel 6 in Verbindung mit der Verbindungswand 10 definiert wird. Diese Aufnahmewanne sorgt dafür, dass beispielsweise aus der Schüssel 3 herausgeschleuderte Nahrungsmittel oder allgemein auf dem Boden 4, 5 befindliche Nahrungsmittel den Boden 4, 5 lediglich frontseitig im Bereich seiner frontseitigen Auflage 4 für die Schüssel 3 - wenn überhaupt - verlassen können. Der Verbindungswand 10 kommt also ein zweifacher Nutzen im Sinne einer Stabilitätserhöhung und zur Definition der beschriebenen Aufnahmewanne zu. Aus diesem Grund ist die Verbindungswand 10 auch konvex nach außen gewölbt im Vergleich zum Boden 4, 5 bzw. den senkrecht auf dem Boden 4, 5 aufstehenden Sockeln 6 ausgelegt.

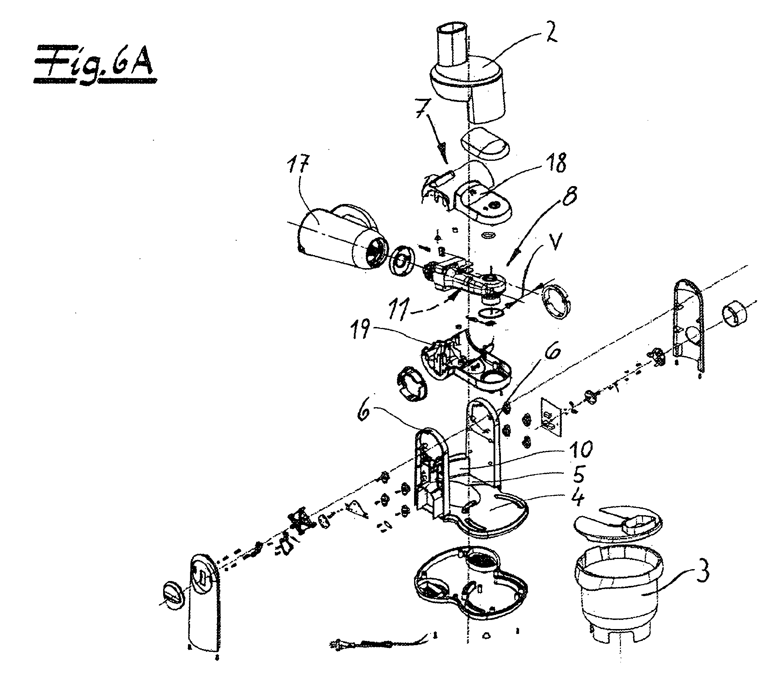

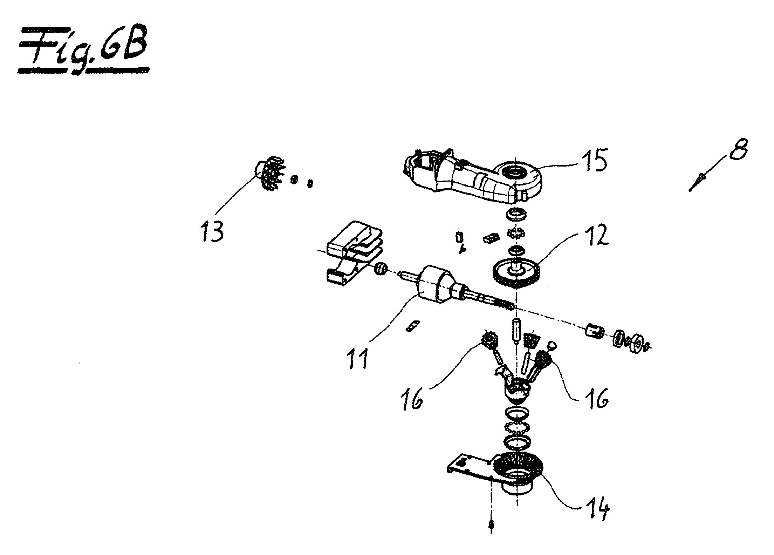

Der Detailaufbau des Antriebsaggregates 8 ist in den Fig. 6A und 6B dargestellt. Man erkennt, dass sich das Antriebsaggregat 8 im Wesentlichen aus einer Rotorwelle 11 und einem frontseitigen Antriebsrad 12 zusammensetzt. Die Rotorwelle 11 kämmt an ihrem frontseitigen Ende mit dem fraglichen und demgegenüber tangential ausgerichteten Antriebsrad 12. Außerdem weist die Rotorwelle 11 an ihrem rückwärtigen Ende einen Ansatz 13 auf. Neben diesem ersten Ansatz 13 sind noch zwei weitere Ansätze 14, 15 realisiert. Diese beiden Ansätze 14, 15 finden sich jeweils oberseitig und unterseitig des Antriebsrades 12.

Tatsächlich ist die Rotorwelle 11 tangential an das Antriebsrad 12 angeschlossen und kämmt mit diesem. Die beiden Ansätze 14, 15 werden nun von dem Antriebsrad 12 beaufschlagt und finden sich jeweils in axialer Verlängerung des Antriebsrades 12, welches seinerseits parallel zur Quertraverse 7 und der durch die Quertraverse 7 hindurchgehenden horizontalen Achse 9 angeordnet ist. Dabei ist dem Ansatz 14 ein Kegelradgetriebe zugeordnet, welches mit Planetenrädern 16 ausgerüstet ist. Die Planetenräder 16 verfügen ebenso wie das Antriebsrad 12 über eine Kegelverzahnung. Auf diese Weise vollführt der an den Ansatz 14 angeschlossene Teigrührer 1 entsprechend der Fig. 2 eine Taumelbewegung. Das ist selbstverständlich nur beispielhaft zu verstehen.

Denn bei den jeweiligen Ansätzen 13, 14, 15 handelt es sich im Kern um kreiszylindrische Körper, an die die unterschiedlichen Nahrungsmittel-Zubereitungswerkzeuge 1, 2, 17 außen angesteckt bzw. aufgesteckt werden können und sich mit Hilfe des Antriebsaggregates 8 antreiben lassen. Beispielsweise kann in der Funktionsstellung nach Fig. 4 auf den rückwärtigen Ansatz 13 der lediglich angedeutete Mixer 17 aufgesetzt und mit Hilfe des Antriebsaggregates 8 angetrieben werden. Die Rotorwelle 11 inklusive Antriebsrad 12 und Planetenräder 16 wird insgesamt in einem Gehäuse 18, 19 aufgenommen, welches zweigeteilt ist und sich aus einer Oberschale 18 und einer Unterschale 19 zusammensetzt (vgl. Fig. 2). Das horizontal geteilte Gehäuse 18, 19 definiert die Quertraverse 7 und nimmt in seinem Innern unter anderem die Rotorwelle 11, das Antriebsrad 12 und die Planetenräder 16 sowie die beiden Ansätze 14, 15 auf. Dabei findet sich der Ansatz 14 in der Gehäuseunterschale 19, wohingegen der Ansatz 15 in der Gehäuseoberschale 18 ausgebildet ist (vgl. Fig. 3 und 6A).

Anhand der Fig. 6A erkennt man, dass die beiden Ansätze 14, 15 im Vergleich zur Rotorwelle 11 einen Versatz V aufweisen. Dieser Versatz V schlägt sich auch in den beiden Gehäuseteilen 18, 19 und in dem kombinierten Aggregat bzw. der Baueinheit 7, 8 aus der Quertraverse 7 sowie dem damit verbundenen Antriebsaggregat 8 nieder, wie die Fig. 1 deutlich macht. Denn dort erkennt man bei einer vergleichenden Betrachtung mit der Fig. 6A, dass das Antriebsaggregat 8 in etwa mittig bis leicht seitlich versetzt im Vergleich zu einer mittigen Symmetrieachse bzw. Symmetrieebene S an die Quertraverse 7 angeschlossen ist.

Tatsächlich sind die beiden Ansätze 14, 15 in etwa auf der fraglichen Symmetrieachse bzw. Symmetrieebene S angeordnet. Demgegenüber weist die Rotorwelle 11 den bereits angesprochenen Versatz V auf. Das dargestellte Küchengerät ist größtenteils spiegelsymmetrisch gegenüber der Symmetrieebene S ausgelegt. Im Vergleich hierzu ist die Rotorwelle 11 um den (geringfügigen) Betrag bzw. Versatz V im Beispielfall nach links versetzt angeordnet. Das ist selbstverständlich nur beispielhaft und nicht einschränkend zu verstehen.

Der Schwerpunkt SP ist in der Nähe oder auf der Symmetrieebene S platziert. Schwenkbewegungen der Quertraverse 7 inklusive Antriebsaggregat 8 führen nun dazu, dass sich die Lage des Schwerpunktes SP beim Übergang von der Fig. 1 zur Fig. 4 im Vergleich zu den beiden Sockeln 6 und auch zur Quertraverse 7 praktisch nicht ändert. Tatsächlich bewegt sich der Schwerpunkt SP bei diesem Vorgang geringfügig entlang der Symmetrieebene S bzw. in kleinem Abstand hierzu. Dadurch können Kippmomente um oder in Bezug auf die Sockel 6 schon dem Grunde nach bei einem bestimmungsgemäßen Gebrauch nicht auftreten und erklärt sich die außerordentlich große Standfestigkeit des dargestellten Küchengerätes.

Erfindungsgemäß setzt sich der Boden 4, 5 aus dem Verbindungsbereich 5 zwischen den beiden Sockeln 6 und der frontseitig daran anschließenden Auflage 4 für die Schüssel 3 zusammen. Man erkennt insbesondere in der Fig.1, dass die fronseitige Auflage 4 für die Schüssel 3 mit mehreren Aufnahmenuten 20 ausgerüstet ist. Tatsächlich sind zwei seitliche Aufnahmenuten 20 und eine rückwärtige Aufnahmenut 20 realisiert, wie die Fig. 3 ergänzend deutlich macht. Die Aufnahmenuten 20 sind jeweils umfangseitig der frontseitigen Auflage 4 vorgesehen und bogenförmig gestaltet. Dabei ist die bogenförmige Gestaltung der Aufnahmenuten 20 an die Kreisform der frontseitigen Auflage 4 bzw. diejenige der Schüssel 3 angepasst.

Anhand der Fig. 5 erkennt man, dass die Schüssel 3 fußseitig mit Stegen 21 ausgerüstet ist. Dabei finden sich zwei seitliche und ein rückwärtiger Steg 21 und ist zudem noch ein frontseitiger Steg 22 vorgesehen. Mit Hilfe des frontseitigen Steges 22 übergreift die Schüssel 3 die Auflage 4 an ihrer Front. Der Steg 22 dient zugleich als Anschlag. Dagegen sorgen die in die zugehörigen Aufnahmenuten 20 eingreifenden Stege 21 fußseitig der Schüssel 3 für ihre Zentrierung auf der Auflage 4 und zugleich dafür, dass die Schüssel 3 kippsicher auf der Auflage 4 gehalten wird. Zu diesem Zweck sind die jeweiligen Stege 21 fußseitig an die Schüssel 3 angeformt und von ihrer Bogenform her an diejenige der Aufnahmenuten 20 angepasst.

Die Fig. 6A macht schließlich deutlich, dass der Boden 4, 5, die Sockel 6 und auch die Rückwand 10 insgesamt ein einstückiges Bauteil 4, 5, 6, 10 bilden. Dieses einstückige Bauteil 4, 5, 6, 10 ist regelmäßig aus Kunststoff gefertigt. Folglich ist ein (einstückiges) Kunststoffbauteil 4, 5, 6, 10 realisiert. Das gilt auch für die Schüssel 3 sowie die beiden Gehäuseteile 18, 19 zur Aufnahme des Antriebsaggregates 8 sowie zur Darstellung der Quertraverse 7. Das heißt, die Schlüssel 3 sowie die beiden Gehäuseteile 18, 19 bestehen ebenfalls aus Kunststoff.

Mit Hilfe einer in Fig. 3 besonders zu erkennenden Handhabe 23 lässt sich die Quertraverse 7 inklusive Antriebsaggregat 8 in verschiedenen Schwenkpositionen gegenüber der horizontalen Achse 9 verriegeln. Hierzu gehört beispielsweise eine 90° Schwenkposition beim Übergang von der Fig. 1 zur Fig. 4, damit an den rückwärtig der Rotorwelle 11 vorgesehenen Ansatz 13 der Mixerbehälter 17 angesteckt werden kann. Bei der Handhabe 23 mag es sich um einen Verriegelungsknopf handeln.

Zu dem Bauteil bzw. Kunststoffbauteil 4, 5, 6, 10 treten noch weitere Gehäuseteile überwiegend ebenfalls aus Kunststoff zur Vervollständigung hinzu. Diese übernehmen allerdings keine tragende Funktion.

## Patentansprüche

1. Küchengerät, insbesondere elektromotorische Universalküchenmaschine zur Aufnahme einer Anzahl austauschbarer Nahrungsmittel-Zubereitungswerkzeuge (1, 2, 17) sowie wenigstens einer abnehmbaren Schüssel (3), mit einem Boden (4, 5), ferner mit wenigstens einem Sockel (6), und mit einer an den Sockel (6) angeschlossenen Quertraverse (7), welche ein daran befestigtes sowie seitlich versetzt zum Sockel (6) angeordnetes Antriebsaggregat (8) trägt, wobei
- zumindest das Antriebsaggregat (8) um eine im Wesentlichen horizontale Achse (9) schwenkbar ausgebildet ist,
- zwei im Wesentlichen gleich ausgeführte Sockel (6) jeweils endseitig der Quertraverse (7) vorgesehen sowie in ihrem rückwärtigen Bereich durch eine Verbindungswand (10) miteinander gekoppelt sind,
- die beiden Sockel (6) randseitig an den Boden (4, 5) angeschlossen sind bzw. auf dem Boden (4, 5) aufstehen,
- die horizontale Achse (9) kopfseitig durch den jeweiligen Sockel (6) und die Quertraverse (7) hindurchgeht,
- die beiden Sockel (6), der Boden (4, 5) und die Verbindungswand (10) ein einstückiges Bauteil (4, 5, 6, 10), insbesondere ein einstückiges Kunststoffbauteil (4, 5, 6, 10), definieren,
- sich ausgehend von einem Verbindungsbereich (5) zwischen den beiden Sockeln (6) eine frontseitige Auflage (4) mit an die Größe der dort aufgenommenen und platzierten Schüssel (3) ausgelegter Gestaltung erstreckt, wobei
- sich der Boden (4, 5) aus dem Verbindungsbereich (5) zwischen den beiden Sockeln (6) und der frontseitig daran anschließenden Auflage (4) für die Schüssel (3) zusammensetzt,
- die beiden Sockel (6) in ihrem rückwärtigen Bereich durch die an den Boden (4, 5) angeschlossene Verbindungswand (10) miteinander gekoppelt sind,
- die Verbindungswand (10) gegenüber dem Verbindungsbereich (5) hochgezogen ist, und wobei
- die Verbindungswand (10) spaltfrei an die beiden Sockel (6) einerseits und an den Verbindungsbereich (5) bzw. den Boden (4, 5) andererseits angeschlossen ist, so dass
- sich zwischen den beiden Sockeln (6) eine Art Aufnahmewanne bildet, welche am Boden (4, 5) durch den Verbindungsbereich (5) und an den Seiten durch die beiden Sockel (6) in Kombination mit der Verbindungswand (10) definiert wird, **gekennzeichnet dadurch, dass**
- die Auflage (4) mit mehreren umfangsseitig der Auflage (4) vorgesehenen bogenförmigen Aufnahmenuten (20) für hierin eingreifende Stege (21) der Schüssel (3) ausgerüstet ist,
- die Auflage kreisscheibenartig ausgelegt ist,
- die Schüssel (3) fußseitig mit den Stegen (21) ausgerüstet ist,
- die bogenförmige Gestaltung der Aufnahmenuten (20) an die Kreisform
der frontseitigen Auflage (4) und diejenige der Schüssel (3) angepasst ist.

2. Küchengerät nach Anspruch 1, **dadurch gekennzeichnet, dass** das Antriebsaggregat (8) in etwa mittig bis leicht seitlich versetzt (Versatz V) im Vergleich zu den beiden Sockeln (6) an die Quertraverse (7) angeschlossen ist.

3. Küchengerät nach einem der Ansprüche 1 oder 2, **dadurch gekennzeichnet, dass** die Verbindungswand (10) konvex nach außen gewölbt ausgebildet ist.

4. Küchengerät nach Anspruch 3, **dadurch gekennzeichnet, dass** das Antriebsaggregat (8) mit einem rückwärtigen Ansatz (13) zum Antrieb eines ansteckbaren sowie austauschbaren Nahrungsmittel-Zubereitungswerkzeuges (2, 17) ausgerüstet ist.

5. Küchengerät nach Anspruch 4, **dadurch gekennzeichnet, dass** der Ansatz (13) in Verlängerung einer Rotorwelle (11) des Antriebsaggregates (8) angeordnet ist.

6. Küchengerät nach einem der Ansprüche 1 bis 5, **dadurch gekennzeichnet, dass** das Antriebsaggregat (8) neben der Rotorwelle (11) ein damit frontseitig kämmendes Antriebsrad (12) aufweist.

7. Küchengerät nach Anspruch 6, **dadurch gekennzeichnet, dass** das frontseitige Antriebsrad (12) mit zwei sich gegenüberliegenden Ansätzen (14, 15) zum Antrieb weiterer ansteckbarer sowie austauschbarer Nahrungsmittel-Zubereitungswerkzeuge (1, 2, 17) ausgerüstet ist.

8. Küchengerät nach einem der Ansprüche 1 bis 7, **dadurch gekennzeichnet, dass** das Antriebsaggregat (8) inklusive Quertraverse (7) in einem im Wesentlichen zweigeteilten Gehäuse (18, 19) aufgenommen wird.

9. Küchengerät nach einem der Ansprüche 1 bis 8, **dadurch gekennzeichnet, dass** die Quertraverse (7) zusammen mit dem Antriebsaggregat (8) in verschiedenen Schwenkpositionen im Vergleich zur Horizontalachse (9) arretierbar ist.

10. Küchengerät nach einem der Ansprüche 1 bis 9, **dadurch gekennzeichnet, dass** sich die Quertraverse (7) inklusive Antriebsaggregat (8) mit Hilfe einer Handhabe (23) in verschiedenen Schwenkpositionen gegenüber der horizontalen Achse (9) verriegeln lässt.

## Claims

1. A food processor, in particular an electromotive universal food processor for receiving a number of exchangeable food preparation tools (1, 2, 17) as well as at least one removable bowl (3), with a bottom (4, 5), furthermore with at least one pedestal (6), and with a cross-member (7) connected to the pedestal (6), which supports a drive unit (8) attached thereto and arranged so as to be laterally offset from the pedestal (6), wherein
- at least the drive unit (8) is pivotable about a substantially horizontal axis (9),
- two essentially identically designed pedestals (6) are provided on either side of the cross-member (7) and are coupled with each other by a connecting wall (10) in their rearward area,
- the two pedestals (6) are connected to the bottom (4, 5) at their edges or rest on the bottom (4, 5),
- the horizontal axis (9) passes through the respective pedestal (6) at the top and through the cross-member (7),
- the two pedestals (6), the bottom (4, 5) and the connecting wall (10) define a one-piece component (4, 5, 6, 10), in particular a one-piece plastic component (4, 5, 6, 10),
- a front supporting surface (4) extends starting from a connecting area (5) between the pedestals (6), which is designed to match the size of the bowl (3) thereon received and placed, wherein
- the bottom (4, 5) is composed of the connecting area (5) between the two pedestals (6) and the frontally adjoining supporting surface (4) for the bowl (3),
- the two pedestals (6), in their rearward area, are coupled to each other by the connecting wall (10) connected to the bottom (4, 5),
- the connecting wall (10) is drawn up in relation to the connecting area (5),
- the connecting wall (10) is connected without a gap to the two pedestals (6) on the one hand and to the connecting area (5) or the bottom (4, 5) on the other, resulting
- in a kind of receiving trough being formed between the two pedestals (6), which is defined on the bottom (4, 5) by the connecting area (5) and on the sides by the two pedestals (6) in combination with the connecting wall (10),
**characterised in that**
- the supporting surface (4) is equipped with several arc-shaped receiving grooves (20) provided on the circumference of the supporting surface (4) for lands (21) on the bowl (3) to engage therein,
- the supporting surface is designed in the manner of a circular disc,
- the bowl (3) is equipped with the lands (21) on its bottom,
- the arc-shaped form of the receiving grooves (20) is adapted to match the circular shape of the frontal supporting surface (4) and that of the bowl (3).

2. Food processor according to claim 1, **characterised in that** the drive unit (8) is connected to the cross-member (7) roughly centrally to slightly laterally offset (offset V), when compared to the two pedestals (6).

3. Food processor according to one of claims 1 or 2, **characterised in that** the connecting wall (10) is arched convexly outwards.

4. Food processor according to claim 3, **characterised in that** the drive unit (8) is equipped with a rearward extension (13) for driving an attachable and exchangeable food preparation tool (2, 17).

5. Food processor according to claim 4, **characterised in that** the extension (13) is arranged as an elongation of a rotor shaft (11) of the drive unit (8).

6. Food processor according to one of claims 1 to 5, **characterised in that** the drive unit (8), apart from the rotor shaft (11), comprises a drive wheel (12) meshing therewith at the front.

7. Food processor according to claim 6, **characterised in that** the front drive wheel (12) is equipped with two extensions (14, 15) opposite each other for driving further attachable and exchangeable food preparation tools (1, 2, 17).

8. Food processor according to one of claims 1 to 7, **characterised in that** the drive unit (8) including the cross-member (7) is received in an essentially two-part housing (18, 19).

9. Food processor according to one of claims 1 to 8, **characterised in that** the cross-member (7) together with the drive unit (8) can be arrested in various pivoting positions, compared to the horizontal axis (9).

10. Food processor according to one of claims 1 to 9, **characterised in that** the cross-member (7) including the drive unit (8) can be locked with the aid of a handle (23) in various pivoting positions in relation to the horizontal axis (9).

## Revendications

1. Appareil électroménager, en particulier un robot de cuisine universel, destiné à recevoir un certain nombre d'ustensiles interchangeables (1, 2, 17) pour la préparation d'aliments, et au moins un bol amovible (3), avec un fond (4, 5) et avec au moins un socle (6), et avec une traverse (7) reliée au socle (6) et portant une unité d'entraînement (8) fixée à celle-ci et installée de façon latéralement décalée par rapport au socle (6), dans lequel
- au moins l'unité d'entraînement (8) est conçue de manière à pivoter autour d'un axe essentiellement horizontal (9),
- deux socles (6) conçus de manière quasiment identique sont prévus respectivement à l'extrémité de la traverse (7), et accouplés l'un à l'autre dans leur région arrière par une cloison de liaison (10),
- les deux socles (6) sont reliés au fond (4, 5) par le bord ou se dressent sur le fond (4, 5),
- l'axe horizontal (9) traverse chacun des socles (6) et la traverse (7) avec son extrémité supérieure,
- les deux socles (6), le fond (4, 5) et la cloison de liaison (10) définissent une pièce intégrale (4, 5, 6, 10), en particulier une pièce intégrale en plastique (4, 5, 6, 10),
- un appui frontal (4) s'étend à partir d'une région de liaison (5) entre les deux socles (6), avec une forme adaptée à la taille du bol (3) reçu et placé à cet endroit, dans lequel
- le fond (4, 5) est composé de la région de liaison (5) entre les deux socles (6) et de l'appui (4) qui suit du côté frontal pour le bol (3),
- les deux socles (6) sont accouplés l'un à l'autre dans leur région arrière, par la cloison de liaison (10) reliée au fond (4, 5),
- la cloison de liaison (10) est tirée vers le haut par rapport à la région de liaison (5), et dans lequel
- la cloison de liaison (10) est reliée sans jeu aux deux socles (6) d'une part, et à la région de liaison (5) ou au fond (4, 5) d'autre part, de sorte que
- une sorte de cuvette de réception est formée entre les deux socles (6), définie par la région de liaison (5) au fond (4, 5) et par les deux socles (6) sur les côtés, en combinaison avec la cloison de liaison (10),
**caractérisé en ce que**
- l'appui (4) est pourvu de plusieurs rainures d'admission (20) arquées, prévues du côté du pourtour de l'appui (4), pour les âmes (21) du bol (3) s'engageant dans celles-ci,
- l'appui est conçu comme un disque circulaire,
- le bol (3) est pourvu d'âmes (21) à son extrémité inférieure,
- la conception arquée des rainures d'admission (20) est adaptée à la forme circulaire de l'appui frontal (4) et à celle du bol (3).

2. Appareil électroménager selon la revendication 1, **caractérisé en ce que** l'unité d'entraînement (8) est raccordé à la traverse (7) en étant de à peu près centré à légèrement décalé sur le côté (décalage V) par rapport aux deux socles (6).

3. Appareil électroménager selon l'une des revendications 1 ou 2, **caractérisé en ce que** la cloison de liaison (10) est conçue voûtée vers l'extérieur de façon convexe.

4. Appareil électroménager selon la revendication 3, **caractérisé en ce que** l'unité d'entraînement (8) est pourvue d'un embout arrière (13) pour l'entraînement d'un accessoire de préparation d'aliments (2, 17) enfichable et interchangeable.

5. Appareil électroménager selon la revendication 4, **caractérisé en ce que** l'embout (13) est agencé dans le prolongement d'un arbre à rotor (11) de l'unité d'entraînement (8).

6. Appareil électroménager selon l'une des revendications 1 à 5, **caractérisé en ce qu'**à côté de l'arbre de rotor (11), l'unité d'entraînement (8) comporte une roue d'entraînement (12) engrenant avec celui-ci du côté frontal.

7. Appareil électroménager selon la revendication 6, **caractérisé en ce que** la roue d'entraînement (12) côté frontal est pourvue de deux embouts opposés (14, 15) pour l'entraînement d'autres accessoires de préparation d'aliments (1, 2, 17) enfichables et interchangeables.

8. Appareil électroménager selon l'une des revendications 1 à 7, **caractérisé en ce que** l'unité d'entraînement (8) y compris la traverse (7) est reçue dans un boîtier (18, 19) essentiellement divisé en deux.

9. Appareil électroménager selon l'une des revendications 1 à 8, **caractérisé en ce que** la traverse (7) ensemble avec l'unité d'entraînement (8) peut être bloquée dans différentes positions de pivotement par rapport à l'axe horizontal (9).

10. Appareil électroménager selon l'une des revendications 1 à 9, **caractérisé en ce que** la traverse (7) y compris l'unité d'entraînement (8) peut être verrouillée à l'aide d'une manette (23) dans différentes positions de pivotement par rapport à l'axe horizontal (9).
